Europäisches Patentamt

European Patent Office

Office européen des brevets

(11) Numéro de publication : **0 150 647**
**B1**

(12) ## FASCICULE DE BREVET EUROPÉEN

(45) Date de publication du fascicule du brevet :
02.03.88

(51) Int. Cl.⁴ : **B 01 D 35/18**, C 22 B 9/02,
G 21 C 19/30

(21) Numéro de dépôt : 84402718.5

(22) Date de dépôt : 26.12.84

(54) Piège froid pour épuration de sodium liquide contenant des impuretés.

(30) Priorité : 05.01.84 FR 8400123

(43) Date de publication de la demande :
07.08.85 Bulletin 85/32

(45) Mention de la délivrance du brevet :
02.03.88 Bulletin 88/09

(84) Etats contractants désignés :
CH DE GB IT LI SE

(56) Documents cités :
FR-A- 1 549 434
FR-A- 2 395 570
US-A- 3 315 737
PATENTS ABSTRACTS OF JAPAN, vol. 1, no. 97, 30
août 1977, page 2136 C 77
PATENTS ABSTRACTS OF JAPAN, vol. 1, no. 102, 10
septembre 1977, page 2265 C 77

(73) Titulaire : ELECTRICITE DE FRANCE Service National
2, rue Louis Murat
F-75008 Paris (FR)

(72) Inventeur : Desir, Dominique
75 rue Charles de Gaulle
F-78350 Jouy-en-Josas (FR)

(74) Mandataire : Mongrédien, André et al
c/o BREVATOME 25, rue de Ponthieu
F-75008 Paris (FR)

Jouve, 18, rue St-Denis, 75001 Paris, France

## Description

La présente invention a pour objet un piège froid destiné à retenir les impuretés que l'on peut rencontrer dans le sodium liquide d'un circuit alimentant une capacité, tel qu'on en rencontre par exemple dans l'industrie nucléaire.

Les impuretés qui se trouvent dans le sodium liquide d'un tel circuit peuvent être d'origines diverses et provenir notamment de la charge initiale du sodium, de la contamination par les matériaux de confinement des cuves qui le renferment et des gaz de couverture de ces mêmes cuves, de la pollution résultant d'entrée d'air accidentelle notamment lors des travaux d'entretien ou de montage sur l'installation dans laquelle circule le sodium, des produits d'une réaction éventuelle entre le sodium et de l'eau, enfin, de la diffusion de l'hydrogène ou de produits hydrogénés à travers les parois des échangeurs de chaleur ou des générateurs de vapeur d'une installation caloportrice.

Toutes ces impuretés doivent être éliminées en permanence dès leur apparition par précipitation-filtration-purification car elles ont des conséquences néfastes sur :

- la précipitation des composés formés avec le sodium dans les branches froides des circuits,
- la fragilisation des aciers (C, $N_2$, $H_2$),
- l'accélération de la corrosion ($O_2$, $H_2$, NaOH),
- l'augmentation de la concentration résiduelle d'hydrogène perturbant le bon fonctionnement de la détection de fuite du circuit de l'installation par mesure de la concentration en hydrogène ($DH_2$).

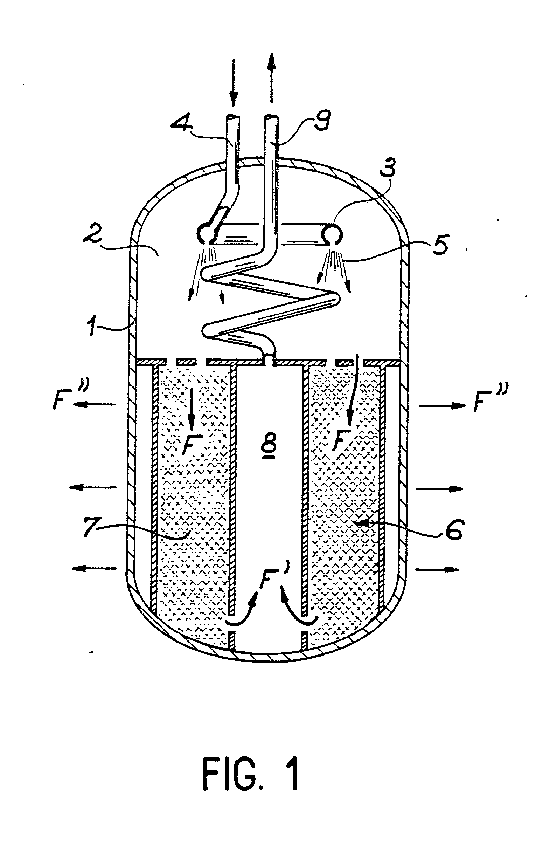

A titre d'exemple, on a représenté sur la figure 1, un piège froid cylindrique de forme connue permettant d'illustrer la constitution et le fonctionnement d'un tel appareil.

Ce piège froid d'un type connu comprend essentiellement un réservoir 1 de section cylindrique à axe vertical dans lequel circule le sodium à purifier en provenance de l'enceinte de confinement (circuit ou cuve). Ce piège froid comporte en partie haute 2 un économiseur 3, constitué de tubes le plus souvent enroulés en hélices, dans lequel pénètre par la canalisation 4 le sodium liquide chaud à traiter. Dans cette partie haute 2, la température du sodium chaud (400 °C environ) est abaissée progressivement pour approcher la température de point froid (110 °C-120 °C) de l'installation. Le sodium s'écoule à partir de l'économiseur 3 par une série de jets tels que 5 dirigés vers la partie basse 6 de l'installation. Cette partie basse comporte essentiellement un tampon filtre 7 de forme annulaire et constitué généralement de « laine » d'acier inoxydable dans laquelle le sodium s'écoule selon les flèches F de haut en bas pour remonter ensuite, comme le montrent les flèches F', dans la cheminée interne centrale 8 et ressortir, après réchauffage jusque vers 360 °C, par la conduite 9.

La partie basse 6 est refroidie et maintenue à la température de point froid à l'aide d'un flux de refroidissement schématisé par les flèches F" sur la figure 1 qui indiquent qu'un gaz ou qu'un liquide de refroidissement s'écoule extérieurement à l'enceinte 1 et sur la partie basse 6 de celle-ci pour abaisser sa température. Ce fluide arrive à une température de 20 °C et s'échauffe jusque vers 80 °C par exemple. Le sodium circulant dans le tampon filtre 7 est maintenu lui aussi à la température de point froid du piège et dépose ses impuretés qui sont à la fois condensées et filtrées au cours de la traversée du tampon filtre 7.

Le sodium traité et épuré qui remonte par la cheminée interne 8 s'écoule ensuite vers l'extérieur par la canalisation 9 après avoir traversé en sens inverse la partie haute 2 du piège.

On voit ainsi que dans le piège de la figure 1, tout le débit du sodium du piège froid passe par le point froid avant de remonter par la cheminée interne 8 jusqu'à la partie haute du piège où il est réchauffé dans l'économiseur 3, jusqu'à une température voisine de sa température d'entrée. Cet économiseur 3, travaille donc ainsi comme un échangeur de chaleur entre le sodium chaud entrant par le conduit 4 et le sodium froid sortant par la conduite 9.

Dans un piège froid du type de celui décrit sur la figure 1, la partie inférieure est généralement refroidie par un fluide gazeux ou liquide, par exemple un liquide organique ou de l'air mis en circulation par une pompe non représentée et le flux de chaleur à évacuer traverse alors l'enveloppe externe du réservoir 1.

Ce mode de réalisation, bien que fonctionnant parfaitement, ne permet toutefois qu'un refroidissement relativement limité du tampon filtrant 7 car les calories à évacuer doivent traverser l'enveloppe externe 1 dont la surface est relativement réduite. Lorsqu'on veut obtenir un flux thermique de refroidissement élevé pour un débit de sodium important (piège de forte capacité) on emploie généralement comme refroidisseur un liquide organique dont la capacité calorifique est plus élevée que celle d'un gaz. Cette technique impose néanmoins, comme indiqué plus haut, de disposer d'un circuit pour ce liquide organique comportant un échangeur de chaleur et une pompe, ce qui alourdit considérablement l'exploitation du piège.

Dans le cas de l'utilisation d'un piège de faible capacité, on peut se contenter de refroidir sa partie basse avec de l'air, mais alors le flux thermique que l'on peut évacuer ainsi est limité par le faible coefficient d'échange entre l'air et la paroi du piège. On peut certes augmenter, mais dans des proportions relativement faibles, le flux d'échange thermique en augmentant la surface d'échange que l'on garnit alors d'ailettes transversales ou longitudinales et/ou de picots et fils soudés sur la virole externe.

De toute façon, des pièges cylindriques connus, du genre de ceux de la figure 1, présentent une capacité de traitement relativement limitée par cette surface d'échange réduite.

La présente invention a précisément pour objet un piège froid pour épuration de sodium liquide contenant des impuretés dont la surface d'échange est accrue de façon sensible par une disposition géométrique particulière de la partie basse du piège.

Ce piège froid pour épuration de sodium liquide contenant des impuretés du type de ceux qui comprennent, dans une enceinte fermée réfrigérée par un fluide de refroidissement s'écoulant au contact de sa surface externe, en partie haute un économiseur pour abaisser la température du sodium chaud et assurer son introduction dans le piège, et, en partie basse, le piège proprement dit contenant un tampon filtre, maintenu à la température de point froid et au travers duquel le sodium s'écoule en abandonnant ses impuretés selon un trajet en double épingle à cheveux comportant une descente à travers la masse du tampon filtre et une remontée dans une cheminée interne à cette masse, se caractérise en ce que l'enceinte est de forme annulaire, le tampon filtre étant logé dans l'espace compris entre deux viroles cylindriques concentriques.

Selon l'invention, la caractéristique essentielle qui consiste à utiliser un piège froid de forme annulaire, permet d'accroître de façon sensible la surface d'échange que l'on peut bien entendu toujours augmenter davantage par l'emploi d'ailettes, picots ou fils. Cette augmentation de surface d'échange thermique permet de refroidir à l'air ou au gaz en général des pièges froids d'une grande capacité et de faire ainsi l'économie des circuits de liquides qui présentent les inconvénients rappelés précédemment.

L'invention peut également s'appliquer à des pièges froids refroidis par liquide organique auquel cas on peut réaliser ainsi des pièges beaucoup plus compacts pour un traitement équivalent, en quantité de sodium, à ceux des pièges classiques.

Selon une caractéristique secondaire de la présente invention, la partie haute du piège est constituée d'une chambre cylindrique unique et non plus annulaire et le fluide de refroidissement de la virole interne de la partie basse est véhiculé selon des trajets « circulaires » à travers une cheminée centrale de distribution.

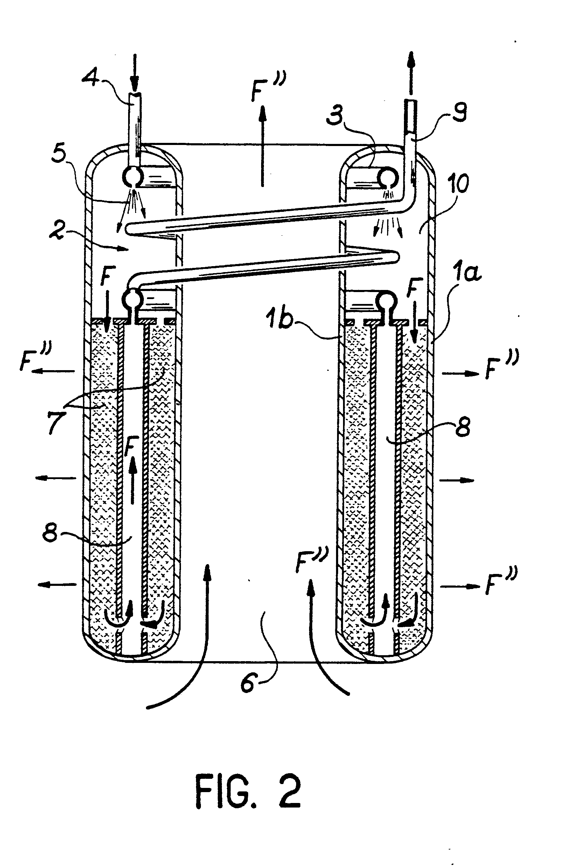

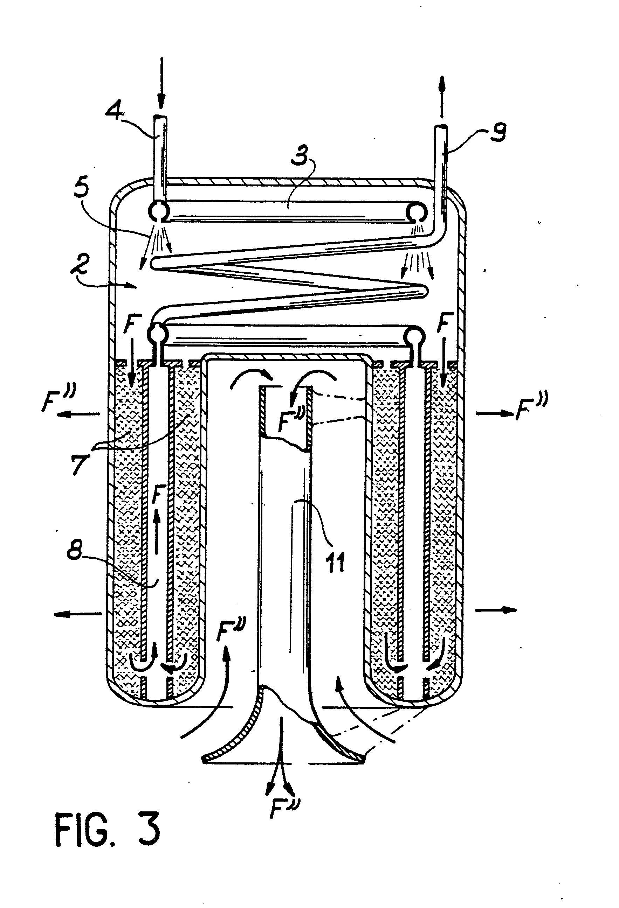

De toute façon, l'invention sera mieux comprise en se référant à la description qui suit d'un exemple de mise en œuvre de piège froid annulaire, description qui sera faite à titre indicatif et non limitatif en se référant aux figures 2 et 3 ci-jointes, sur lesquelles :

- la figure 2 est une coupe schématique selon l'axe d'un piège froid annulaire selon l'invention,
- la figure 3 est une coupe schématique selon l'axe d'un piège froid annulaire selon une variante de l'invention dans laquelle la partie haute du piège est constituée d'une chambre cylindrique unique.

Sur la figure 2, on retrouve la capacité externe 1a du piège froid, mais cette fois doublée d'une deuxième virole interne 1b entre lesquelles est ainsi délimité un espace annulaire 10 qui contient en partie basse le tampon filtre 7 de « laine » d'acier inoxydable. Dans cet espace 10, le tampon d'acier 7 a toujours lui-même une forme annulaire présentant une cheminée interne 8 de remontée du sodium ayant traversé le tampon 7. Comme sur la figure 1 d'ailleurs, le sens de circulation du sodium est indiqué par les flèches F.

Dans l'exemple de la figure 2, l'enceinte contenant le piège froid est annulaire de bas en haut, c'est-à-dire aussi bien dans la partie haute 2 que dans la partie basse 6. Comme sur la figure 1, on retrouve une entrée de sodium 4 et une sortie de sodium 9 et l'économiseur 3, muni de ses orifices de distribution de sodium en pluie 5. Le fluide réfrigérant qui lèche la paroi interne 1b du piège annulaire s'écoule selon l'axe vertical de l'appareil dans l'espace interne délimité par cette virole 1b.

Le fonctionnement du piège froid annulaire de la figure 2 a lieu selon le même processus que celui du piège cylindrique connu de la figure 1, mais l'augmentation de la surface d'échange entre la partie inférieure des viroles 1a et 1b et le flux de refroidissement (gaz ou liquide) schématisé par les flèches F" a lieu selon une surface qui est approximativement de l'ordre du double de la surface du piège froid de la figure 1 pour des dimensions externes comparables. On réalise ainsi une économie considérable par l'accroissement de l'échange thermique qui en résulte.

Dans une variante de réalisation du piège froid représenté sur la figure 3, la partie haute 2 n'est plus annulaire mais simplement cylindrique et dans ce cas, le fluide de refroidissement du cylindre interne 1b est véhiculé selon des trajets « circulaires » à travers la cheminée centrale 11 centrée sur l'axe commun aux deux viroles 1a et 1b.

## Revendications

1. Piège froid pour épuration de sodium liquide contenant des impuretés, du type de ceux qui comprennent, dans une enceinte fermée (1) réfrigérée par un fluide de refroidissement s'écoulant au contact de sa surface externe (1a), en partie haute (2) un économiseur (3, 9) pour abaisser la température du sodium chaud et assurer son introduction dans le piège, et, en partie basse, le piège proprement dit contenant un tampon filtre (7), maintenu à la température de point froid et au travers duquel le sodium s'écoule en abandonnant ses impuretés selon un trajet en double épingle à cheveux comportant une descente à travers la masse du tampon filtre (7) et une remontée dans une cheminée interne (8) à cette masse, caractérisé en ce que l'enceinte (1) est de forme annulaire, le tampon filtre (7) étant logé dans l'espace (10) compris entre deux viroles cylindriques concentriques (1a, 1b).

2. Piège froid selon la revendication 1, caractérisé en ce que sa partie haute (2) est constituée d'une chambre cylindrique, le fluide de refroidis-

sement de la virole interne (1b) de la partie basse étant véhiculé selon des trajets « circulaires » à travers une cheminée de distribution (11).

## Claims

1. Cold trap for purifying liquid sodium containing impurities of the type comprising in a sealed enclosure (1) cooled by a cooling fluid flowing in contact with its outer surface (1a), in the upper part (2) an economizer (3, 9) for lowering the hot sodium temperature and ensuring its introduction into the trap, and in the lower part the actual trap containing a filter plug (7), maintained at the cold point temperature and through which the sodium flows whilst giving up its impurities, in accordance with a double hairpin path involving a downward travel through the material of filter plug (7) and an upward travel in a shaft (8) within said material, characterized in that the enclosure (1) is annular, the filter plug (7) being located in a space between two concentric cylindrical ferrules (1a, 1b).

2. Cold trap according to claim 1, characterized in that its upper part (2) is constituted by a single cylindrical chamber, the cooling fluid of the inner ferrule (1b) of the lower part being passed in « circular » paths through a central distribution shaft (11).

## Patentansprüche

1. Kaltfalle zur Reinigung von Verunreinigungen umfassendem flüssigem Natrium mit einem geschlossenen Behälter (1), der durch ein in Berührung mit seiner Außenfläche (1a) strömendes Kühlfluid gekühlt ist, in seinem oberen Teil (2) einen Vorkühler (3, 9) enthält, um die Temperatur des heißen Natriums abzusenken und dessen Einbringen in die Falle sicherzustellen, und in einem unteren Teil die eigentliche, einen Tamponfilter (7) enthaltende Falle aufweist, die auf der Kühlpunkttemperatur gehalten ist und durch die das Natrium unter Zurücklassen seiner Verunreinigungen längs einer doppelten Haarnadelbahn hindurchströmt, die einen Abstieg durch die Masse des Tamponfilters (7) hindurch und ein Aufsteigen durch einen sich innerhalb dieser Masse befindenden, inneren Kanal (8) umfaßt, dadurch gekennzeichnet, daß der Behälter (1) ringförmig ist, wobei der Tamponfilter (7) in dem Raum (10) untergebracht ist, der zwischen zwei konzentrischen, zylindrischen Mänteln (1a, 1b) eingefaßt ist.

2. Kaltfalle nach Anspruch 1, dadurch gekennzeichnet, daß ihr oberer Teil (2) von einer zylindrischen Kammer gebildet ist und das Kühlfluid des inneren Mantels (1b) des unteren Teils auf « kreisförmigen » Bahnen durch einen Verteilungskanal (11) hindurch transportiert wird.

FIG. 1

FIG. 2

FIG. 3